# EUROPEAN PATENT APPLICATION

(11) **EP 4 307 113 A1**
(43) Date of publication of application: **17.01.2024**
(21) Application number: 22184462.4
(22) Date of filing: 12.07.2022
(51) Int. Cl.: G06F 9/50, G06F 1/10, G06F 9/455

(54) **METHOD FOR AUTOMATICALLY PROVIDING A TIME SIGNAL TO CONTAINERS OR TO VIRTUAL MACHINES AND SYSTEM FOR EXECUTING SOFTWARE APPLICATIONS RUNNING IN CONTAINERS OR VIRTUAL MACHINES AND RELATED COMPUTER PROGRAM PRODUCT AND COMPUTER-READABLE MEDIUM**

(71) Applicant: ABB SCHWEIZ AG, 5400 Baden (CH)
(72) Inventor: SCHOENBORN, Sandro, 4059 Basel (CH); BIRKE, Robert, 8802 Kilchberg (CH); SIVANTHI, Thanikesavan, 5303 Würenlingen (CH)
(74) Representative: Zimmermann & Partner Patentanwälte mbB

(57) **Abstract**

A method 100 for automatically providing a time signal to containers in an operating system level virtualization or to virtual machines, the method comprising:
- creating 102 a pool of clocks;
- executing 104 one or more containers in an operating system level virtualization or one or more virtual machines running on an executing hardware device;
- allocating 106 one or more clocks of the pool of clocks to client containers in the one or more containers or to client virtual machines of the one or more virtual machines, thereby obtaining allocated clocks allocated to the client containers or the client virtual machines;
wherein each of the allocated clocks provides a time signal in a time domain to at least one of the client containers or to at least one of the client virtual machines.

## Description

### TECHNICAL FIELD

The present disclosure relates to methods and systems for automatically providing a time signal to containers in an operating system level virtualization or to virtual machines and/or for executing software applications running in containers of an operating system level virtualization or in virtual machines.

### BACKGROUND

Operating-system-level virtualization based on containers is used in the automation domain with increasing frequency. Automation software typically requires time synchronization to ensure timely and accurate control and supervision of for example an automated plant, device, power grid, etc.

There is currently no possibility to run accurate and independent synchronization inside containers. This limits each container to the same time domain and allows only a single time in the system.

### SUMMARY

The invention is defined by the independent claims. The dependent claims define further embodiments of the invention.

According to an aspect, a method for automatically providing a time signal to containers in an operating system level virtualization or to virtual machines is provided, the method comprising:
- creating a pool of clocks;
- executing one or more containers in an operating system level virtualization or one or more virtual machines running on an executing hardware device;
- allocating one or more clocks of the pool of clocks to client containers in the one or more containers or to client virtual machines of the one or more virtual machines, thereby obtaining allocated clocks allocated to the client containers or the client virtual machines;
wherein each of the allocated clocks provides a time signal in a time domain to at least one of the client containers or to at least one of the client virtual machines.

### BRIEF DESCRIPTION OF DRAWINGS

FIG. 1 shows a method for automatically providing a time signal to containers in an operating system level virtualization or to virtual machines according to the present disclosure.
FIG. 2 shows further details of a method for automatically providing a time signal to containers in an operating system level virtualization or to virtual machines according to the present disclosure.
FIG. 3 shows further additional details of a method for automatically providing a time signal to containers in an operating system level virtualization or to virtual machines according to the present disclosure.
FIG. 4 shows mechanisms to provide time to containerized applications according to the present disclosure.

### DETAILED DESCRIPTION

In computing, an emulator is a system, typically called host system, that executes programs/instructions for another system called guest. Typically, an emulator runs an interpreter that executes instructions for the guest system accessing the resources of the host system.

Emulation is typically slow and resource consuming, given the overhead required for executing the interpreter.

In virtualization the resources of a single physical host computer are handled such that said resources are made accessible to multiple guest operating systems or independent guest programs for the same target architecture of the physical host computer, thereby in fact running multiple independent operating systems and/or programs on the same physical host computer alternatively sharing (temporally and/or spatially) the available physical resources.

Virtualization is typically much faster than emulation, because an interpreter is not required and the guest systems/programs target architecture is the same architecture of the host computer.

A hypervisor or virtual-machine-monitor is used in virtualization to allow the partitioning of the resources of the host physical computer.

A virtual machine typically uses a hypervisor to partition the resources of the physical host computer and provides based on said hypervisor a complete virtual guest operating system on which applications are virtually executed. Multiple virtual machines may rely on the same hypervisor.

This may produce a significant and unnecessary overhead, when multiple instances of an operating system (OS) are virtually executed to respectively execute some virtual applications for a constant type of OS.

A more lightweight virtualization is obtained with OS-level virtualization, where instead of a hypervisor monitoring multiple virtual guest operating system (OS) instances on the same host, multiple virtual guest applications run inside containers on the host operating system and without the presence of a (full) guest OS. In other words, the host operating system is equipped with further isolation mechanism and resource-management features to allow multiple virtual instances of guest applications to run separately, i.e. containerized on the same host, without a full virtual guest OS.

Applications running in a container and/or in a virtual machine (VM) may require an access to a clock to obtain information about a time, e.g. a physical time and/or real-time and/or a wall time or a process or thread-specific time and/or a CPU time.

Providing, synchronizing and managing clocks for applications running inside containers may be particularly difficult, in particular considering the reduced management of resources in OS-level virtualization in the absence of a hypervisor.

The present disclosure solves in particular the problem of providing allocated clocks from a pool of clocks to provide time signal(s) in time domain(s) to client container(s) and/or applications running in said container(s) in an OS-level virtualization.

In the present disclosure, containers are containers of an OS-level virtualization that do not require a hypervisor whereas virtual machines are based on a hypervisor/virtual machine monitor.

The present disclosure proposes mechanism to provide software running inside containers with the possibility to synchronize their own clocks. According to the present disclosure, clocks which are available in the system are provided to containers and/or a central service to manage synchronization of different time domains.

Container-level synchronization according to the present disclosure may for example enable running multiple applications on the same host in particular when each application requires to run in a different time domain and needs to handle its own synchronization.

According to the state of the art, applications running inside containers do not get an independent time domain: they typically share the system's time.

For example, on Linux according to the state of the art, containers can get their own time namespace for the monotonic clock but not for the system's real-time clock. The monotonic clock cannot provide full time synchronization capability due to only unidirectional adjustments. The applications running inside containers thus according to the state of the art must rely on the host to synchronize the only time in the system. This prohibits use of individual time domains, e.g. for multiple applications from different vendors with diverging time synchronization schemes or distinct synchronization needs and/or requirements.. It also prevents the applications to keep track of synchronization accuracy without extra effort as synchronization is delegated to the host.

The present disclosure uses a software agent on the host system to provide means to synchronize time inside each container individually. The present disclosure discloses in particular two stages of complexity of the software agent for time domain delegation and includes possible mechanisms to implement independent time domains in containers.

According to the present disclosure, the agent runs on the host and can provide in particular two modes of functionality.

First, it may delegate a clock device to a container upon request. The delegation may exclusively allocate the clock to the container and removes it from system access by the host or different containers.

Software running inside containers may then run synchronization algorithms and keep track of time with the delegated/allocated clock device.

Second, the agent may handle time synchronization of multiple time domains itself. It takes part in standards-defined time synchronization setups and internally manages clocks for each domain. Containerized applications may request to join a domain and directly get a synchronized clock and an interface to read meta data about synchronization state, accuracy, etc.

The software solution according to the present disclosure consists of the host agent that allocates clock devices and/or manages synchronization with multiple time domains and of a mechanism to make the clock available inside the container.

### HOST AGENT

The host agent according to the present disclosure runs on the host OS level or is containerized itself and can interact with containers. It can be an independent component or become part of the OS itself, e.g. as a kernel module or driver. It provides an interface for containerized applications to request a clock or to join a time domain. It may operate in the following modes:
- The agent running on the host may delegate/allocate a clock device to a container upon request. The delegation may exclusively allocate the device to the container and remove it from system access by the host or other containers. Software running inside containers can then run synchronization algorithms and keep track of time with the delegated device. The delegated/allocated devices are either one of the many hardware clocks found in the system such as e.g., clocks on the motherboard, network card clocks, clocks on extension cards, or also software layers on-top of the system clock (software clocks).
- The agent running on the host may manage synchronization with multiple time domains and takes part in standards-defined time domains, e.g. through IEEE 1588 PTP. The agent may allocate a clock device for each time domain and listen to requests from containers to join one of the available time domains. It then allocates a proper clock device for this container. The device can be shared between containers within a single time domain. The agent also provides an interface to publish meta information about synchronization, such as accuracy, etc. For example, the shared clock device may be a read only clock that may be written only by the agent which manages the synchronization.

The described modes provide a communication interface, e.g. TCP/UDP/unix sockets, to request clocks or time domains as well as meta data. The communication interface provides authenticated information using standard, state-of-the-art methods, e.g. cryptographically signed messages, user authentication.

A software clock is for example a map applied to the system clock. The map is a mathematical function controlled by parameter values which are updated upon writes from inside the container and/or from the agent running inside the container/host. The class of maps includes at least linear functions with offset and drift parameters. Potentially, the parameters may also be adapted automatically by the governing agent to target minimization of writes by the container client in a self-adapting version of the software clock, e.g. based on an automatic drift compensation upon each write.

### CLOCK SHARING MECHANISM

The present disclosure proposes in particular following mechanisms to share the clock devices (hardware or software clocks) with the containerized applications:
- The clock may be provided as a device (e.g. /dev/ptpX in Linux). The device may be either emulated or directly routed to an existing hardware clock device. The device may be shared with full write access in the case of clock delegation (mode 1) or read-only to provide access to synchronized time domain (mode 2). Sharing of device files would be handled by OS-level virtualization mechanisms such as namespaces.
- A time API may be provided inside container (e.g. a dynamic library) which communicates with the host time service agent and provides read and write access to container time. In particular for example:
   - User space calls to library may replace syscalls in the target application
   - The library may delegate to host service if needed, e.g. for hardware clock access, software clock handled in library.
   - An online map between container time and system clock may be provided to handle timer and sleep calls, which still require time with respect to system time, at least a relative time.
- Syscalls related to time may be intercepted by a wrapped execution of application with interception of time-related syscalls. The intercepted calls may be handled by the host time service as needed, e.g. forwarded to hardware clock or updated to software clock parameters.

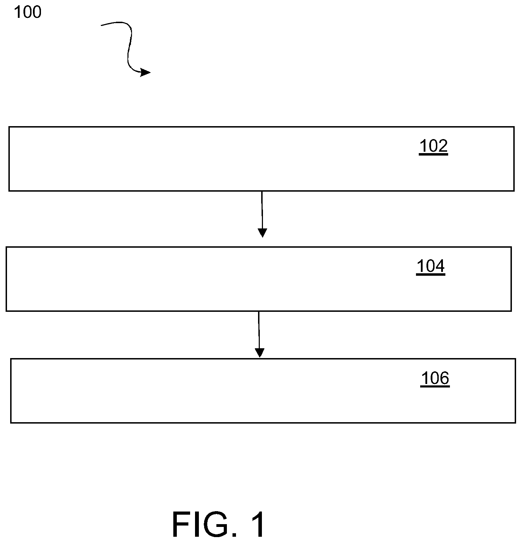

FIG. 1 illustrates a method 100 for automatically providing a time signal to containers in an operating system level virtualization or to virtual machines according to the present disclosure, the method comprising:
- creating 102 a pool of clocks;
- executing 104 one or more containers in an operating system level virtualization or one or more virtual machines running on an executing hardware device;
- allocating 106 one or more clocks of the pool of clocks to client containers in the one or more containers or to client virtual machines of the one or more virtual machines, thereby obtaining allocated clocks allocated to the client containers or the client virtual machines;
wherein each of the allocated clocks provides a time signal in a time domain to at least one of the client containers or to at least one of the client virtual machines.

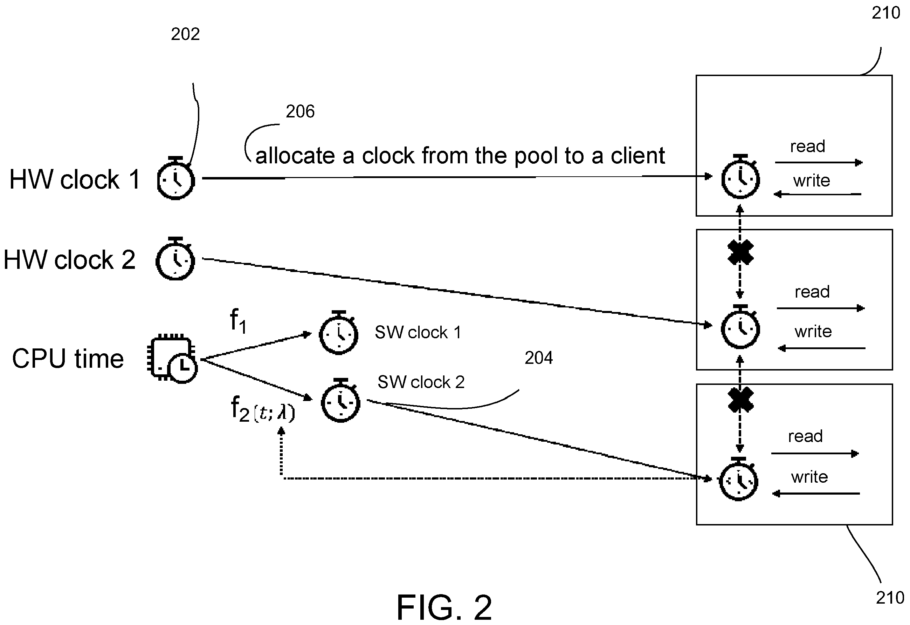

FIG. 2 shows further details of a method 100 for automatically providing a time signal to containers in an operating system level virtualization or to virtual machines according to the present disclosure.

The pool of clocks may include for example hardware clocks 202 and/or software clocks 204. A software clock 204 may be provided for example using a mathematical function *f*₁, for example a function *f*₂(*t*; *λ*) controlled by parameters *λ* which are updated upon writes from inside the container. The functions *f*₁ and/or *f*₂(*t*; *λ*) may be linear functions with offset and drift parameters *λ*.

The hardware (HW) and/or software clocks (SW) may form the pool of clocks and may be allocated 206, according to the allocating 106, to one or more clients 210. The clients 210 may be client containers and/or client virtual machines.

The allocating 106 may be exclusive to a client or grouped, for example being an allocation to a group of client containers and/or to a group of client virtual machines. The group may be formed by one or more clients 210.

Clients 210, e.g. client containers and/or client virtual machines may then access the allocated clocks (202, 204) for reading and/or writing operations and/or a synchronization may be carried out.

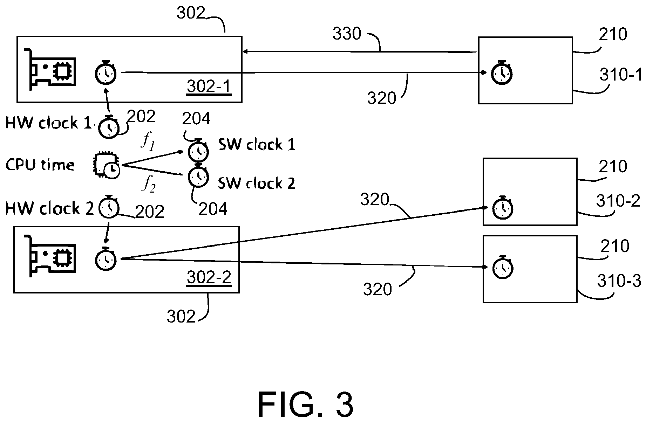

FIG. 3 shows further details of a method for automatically providing a time signal to containers in an operating system level virtualization or to virtual machines according to the present disclosure.

According to the present disclosure, a pool of hardware and software clocks is created and maintained, like for example the software clocks 204 and/or the hardware clocks 202.

One or more of the clocks 202, 204, i.e. one or more of hardware (HW) and/or software (SW) clocks is allocated to clients 210 that may be client containers and/or client virtual machines. Allocated clocks provide a time signal in a time domain 302.

For example, according to FIG. 3, the HW clock 1 of the hardware clocks 202, may provide a first time domain 302-1 and the HW clock 2 of the hardware clocks 202, may provide a second time domain 302-2 of the time domains 302. Clients 210, for example the client 310-1 may then request to join a time domain, for example the first time domain 302-1. For example, the allocation of the HW clock 1 of the hardware clocks 202, may be based on a request 330 to join a time domain requested by the first client 310-1 of the clients 210.

The request 330 to join a time domain may comprise a request for a time signal in a time domain provided by a clock with a specified clock type.

For example, the request 330 to join a time domain requested by the first client 310-1 may comprise a request for a time signal in the first time domain 302-1 provided by HW clock 1 with type "HW clock" (hardware clock).

The clock type may be "HW clock" (hardware clock) or "SW clock" (software clock).

The allocated clock HW clock 1, providing the first time domain 302-1 then provides 320 a time signal in the time domain 302-1 to the first client 310-1.

The time signal provided 320 to the first client 310-1 of the clients 210 may be synchronized to HW clock 1 of the hardware clocks 202. Therefore, an access to a properly synchronized time is provided inside the first client 310-1, for example a client container.

The time domains 302 may be synchronized to respective clocks of the hardware clocks 202 and/or the software clocks 204.

For example, one synchronized clock may be maintained for each time domain and a proper synchronization is carried out. The clock may be a clock of the pool of clocks including hardware and/or software clocks.

The software (SW) clocks may be a result of a mathematical map applied to a master clock/system time (CPU time).

For example, the SW clock 1 may be obtained applying a first function *f*₁ to the CPU time and the SW clock 2 of the software clocks 204 may be obtained applying the function *f*₂ to the CPU time.

A clock of the pool of clocks 202, 204 may be allocated to at least two client containers or to at least two client virtual machines or to at least one client container and at least one client virtual machine. For example, the HW clock 2 of the hardware clocks 202 providing a second time domain 302-2 of the time domains 302 may be allocated to a second client 310-2 and to a third client 310-3 of the clients 210. Therefore, multiple clients, e.g. 310-2, 310-2, can join the same time domain 302-2 efficiently with the allocation of HW clock 2 without the need of allocating additional clocks. For example, in the described case, the clock may be a shared read-only clock to ensure integrity of the time domain synchronization and for example only the synchronization agent may update the clock.

In some embodiments, a clock of the pool of clocks is allocated to at least two client containers or to at least two client virtual machines and/or to at least one container and at least one virtual machine.

In some embodiments, the allocation is based on a request to join a time domain requested by a client container or by a client virtual machine or by an application running thereon.

In some embodiments, the request comprises a request for a time signal in a time domain provided by a clock with a specified clock type; and wherein the request further comprises a read or write permission of the time signal in a time domain; or wherein the request comprises a joining request to join a time signal in a time domain provided by an already allocated clock.

In some embodiments, the clock type includes a hardware type or a software type, wherein a software type identifies a clock obtained based on a map applied to a master clock.

In some embodiments, each time signal in a time domain is synchronized to a respective clock and is accessible for reading or writing independently from different time signals in different time domains, i.e. without a dependency from different time domains.

In some embodiments, each time signal/clock can be synchronized with further time signals/clocks in a time domain provided by the allocated clocks.

Known synchronization algorithms can be used in order to synchronize the clocks/time signals.

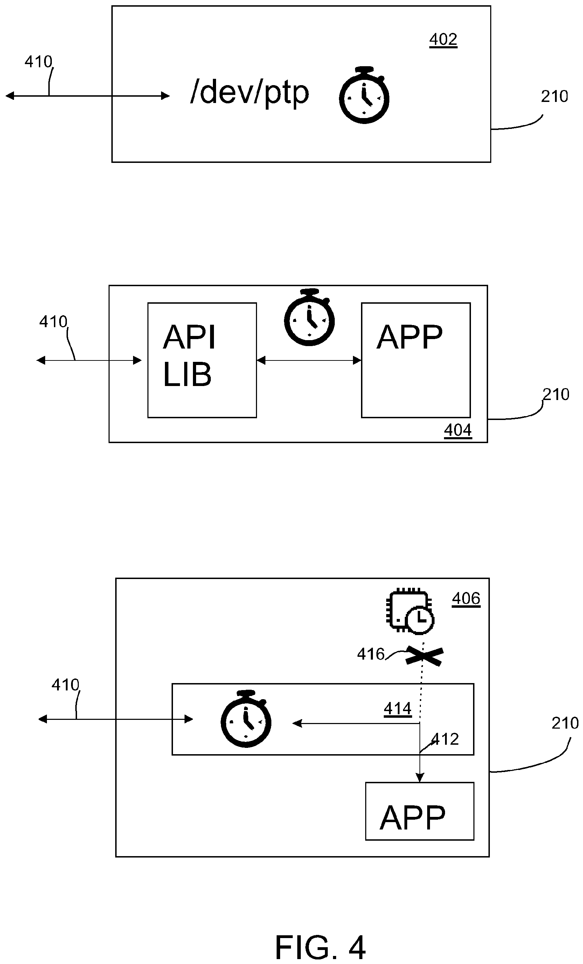

FIG. 4 shows mechanisms to provide time to containerized applications APP according to the present disclosure. The applications APP run inside clients 210 such as client containers or client virtual machines.

A time signal is provided to clients 210 by clock signals 410 provided by allocated clocks of the hardware and/or software clocks 202, 204.

The present disclosure proposes following mechanisms to share the clock devices (hardware or software clocks) with the containerized applications:
- For example, the clock signal 410 (provided by allocated clocks) is provided 402 as a device (e.g. /dev/ptpX in Linux), illustrated as /dev/ptp in FIG. 4. The device is for example either emulated or directly routed to an existing hardware clock device. The device may be shared with full write access in the case of clock delegation (mode 1) or read-only to provide access to synchronized time domain (mode 2). Sharing of device files would be handled by OS-level virtualization mechanisms such as namespaces. Therefore, in some embodiments, the time signal in a time domain is based on a respective allocated hardware clock. The allocated clock may be provided 402 as a device inside the client container or the client virtual machine.
- For example, a time API is provided 404 inside container (e.g. a dynamic library) which communicates with the host time service agent and provides read and write access to container time. In particular for example:
   - User space calls to library may replace syscalls in the target application
   - The library may delegate to host service if needed, e.g. for hardware clock access, software clock handled in library.
   - An online map between container time and system clock may be provided to handle timer and sleep calls, which still require time with respect to system time, at least a relative time.
   Therefore, in some embodiments, the time signal in a time domain is provided 404 by using a software library API LIB providing an application programming interface for requesting time signals, the use of the software library involving a communication with the allocated clocks.
- For example, syscalls 412 related to time are intercepted by a wrapped execution 414 of application with interception 416 of time-related syscalls 412. The intercepted calls are handled by the host time service as needed, e.g. forwarded to hardware clock or updated to software clock parameters. Therefore, in some embodiments, the time signal in a time domain is provided 406 intercepting 416 time system calls 412 and handling the time system calls based on an allocated clock.

The present disclosure further provides, a system for executing software applications running in containers of an operating system level virtualization or in virtual machines, the system comprising:
- at least one clock;
- a hardware device configured for executing one or more software applications inside a container of an operating system level virtualization or in a virtual machine;
- the hardware device further configured to perform the methods of the present disclosure;
wherein the one or more containers or the one or more virtual machines are executed on the hardware device.

The present disclosure further provides a computer program product comprising instructions which, when executed by a computer, cause the computer to carry out the methods of the present disclosure.

The present disclosure further provides a computer-readable medium comprising instructions which, when executed by a computer, cause the computer to carry out the methods of the present disclosure.

It is intended, that the "or" connective is not an exclusive-or (xor), if not otherwise stated. For example, providing a time signal to containers in an operating system level virtualization or to virtual machines includes the case of providing a time signal both to containers and to virtual machines according to the present disclosure.

## Claims

1. A method for automatically providing a time signal to containers in an operating system level virtualization or to virtual machines, the method comprising:
- creating a pool of clocks;
- executing one or more containers in an operating system level virtualization or one or more virtual machines running on an executing hardware device;
- allocating one or more clocks of the pool of clocks to client containers in the one or more containers or to client virtual machines of the one or more virtual machines, thereby obtaining allocated clocks allocated to the client containers or the client virtual machines;
wherein each of the allocated clocks provides a time signal in a time domain to at least one of the client containers or to at least one of the client virtual machines.

2. The method of claim 1, wherein a clock of the pool of clocks is allocated to at least two client containers or to at least two client virtual machines or to at least one client container and at least one client virtual machine.

3. The method of any of claims from 1 to 2, wherein the allocation is based on a request to join a time domain requested by a client container or by a client virtual machine or by an application running thereon.

4. The method of claim 3, wherein the request comprises a request for a time signal in a time domain provided by a clock with a specified clock type; and wherein the request further comprises a read or write permission of the time signal in a time domain; or wherein the request comprises a joining request to join a time signal in a time domain provided by an already allocated clock.

5. The method of any of claims from 1 to 4, wherein the clock type includes a hardware type or a software type, wherein a software type identifies a clock obtained based on a map applied to a master clock.

6. The method of any of claims from 1 to 5, wherein each time signal in a time domain is synchronized to a respective clock and is accessible for reading or writing independently from different time signals in different time domains and/or wherein each time signal is synchronizable with further time signals in time domains provided by the allocated clocks.

7. The method of any of claims from 1 to 6, wherein the time signal in a time domain is based on a respective allocated hardware clock or software clock, in particular wherein the allocated hardware or software clock is provided as a device inside a client container or a client virtual machine.

8. The method of any of claims from 1 to 6, wherein the time signal in a time domain is provided by using a software library providing an application programming interface for requesting time signals, the use of the software library involving a communication with the allocated clocks.

9. The method of any of claims from 1 to 6, wherein the time signal in a time domain is provided intercepting time system calls and handling the time system calls based on an allocated clock.

10. A system for executing software applications running in containers of an operating system level virtualization or in virtual machines, the system comprising:
- at least one clock;
- a hardware device configured for executing one or more software applications inside a container of an operating system level virtualization or in a virtual machine;
- the hardware device further configured to perform the method of any of claims from 1 to 9;
wherein the one or more containers or the one or more virtual machines are executed on the hardware device.

11. A computer program product comprising instructions which, when executed by a computer, cause the computer to carry out the method of any of claims from 1 to 9.

12. A computer-readable medium comprising instructions which, when executed by a computer, cause the computer to carry out the method of any of claims from 1 to 9.
